# EUROPEAN PATENT APPLICATION

(11) **EP 4 429 279 A1**
(43) Date of publication of application: **11.09.2024**
(21) Application number: 22889151.1
(22) Date of filing: 25.10.2022
(51) Int. Cl.: H04W 4/14

(54) **ADDRESSING METHOD AND APPARATUS, AND DEVICE**

(30) Priority: 05.11.2021 CN 202111308305
(71) Applicant: Huawei Technologies Co., Ltd., Shenzhen, Guangdong 518129 (CN)
(72) Inventor: JING, Hao, Shenzhen, Guangdong 518129 (CN); QI, Caixia, Shenzhen, Guangdong 518129 (CN)
(74) Representative: Gill Jennings & Every LLP
(86) International application number: PCT/CN2022/127324
(87) International publication number: WO 2023/078126

(57) **Abstract**

This application discloses an addressing method, an apparatus, and a device. In the method, a proxy network element receives a first request, where the first request includes first indication information, and the first indication information indicates the proxy network element to discover a UDM in a PLMN to which an MT terminal belongs. The proxy network element obtains an identifier of the PLMN to which the MT terminal belongs. The proxy network element obtains an address of the UDM of the PLMN based on the PLMN identifier. The foregoing method is an addressing method applicable to a communication model D in an eSBA architecture. The PLMN and the UDM are queried by using the proxy network element, so that a plurality of interactions between a short message gateway and a core network element are reduced. This helps simplify a short message service procedure. In addition, the foregoing solution uses a discovery service that has been defined and widely used, so that the foregoing solution is easy to implement.

## Description

### CROSS-REFERENCE TO RELATED APPLICATIONS

This application claims priority to Chinese Patent Application No. 202111308305.5, filed with the China National Intellectual Property Administration on November 5, 2021 and entitled "ADDRESSING METHOD, APPARATUS, AND DEVICE", which is incorporated herein by reference in its entirety.

### TECHNICAL FIELD

This application relates to the field of communication technologies, and in particular, to an addressing method, an apparatus, and a device.

### BACKGROUND

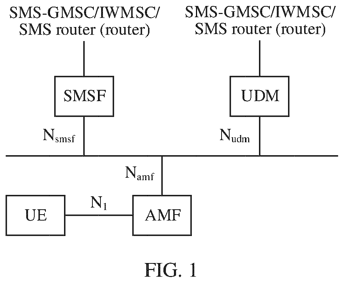

A network architecture supporting a short message service (short message service, SMS) has been defined in a 3GPP standard. As shown in FIG. 1, a short message service function (short message service function, SMSF) is used to support interaction with a short message gateway (SMS-GMSC)/a short message service interworking mobile switching center (IWMSC)/an SMS router (SMS router), and implement a mobile originated (MO)/mobile terminated (MT) short message service with user equipment (user equipment, UE) through an access and mobility management function (access and mobility management function, AMF). The SMSF may be used to support a network attached storage (network attached storage, NAS)-based SMS, and is mainly used to manage user data checking and perform SMS delivery.

In a 5th generation (5th generation, 5G) mobile communication system, a core network uses a service-based architecture (service-based architecture, SBA), and network elements communicate with each other through a service-based interface (service-based interface, SBI). 3GPP R16 proposes an enhanced SBA architecture, that is, an eSBA architecture. In the architecture, a service communication proxy (service communication proxy, SCP) is introduced, and four communication models shown in Table 1 are defined.

**Table 1**

| | | |
|---|---|---|
| Communication between consumer and producer | Service discovery and request routing | Communication model |
| | Service discovery and request routing | |
| Communication between consumer and producer | | Communication model |
| Direct communication | No NRF or SCP; direct routing | A |
| Direct communication | No NRF or SCP; direct routing | |
| | Discovery using NRF services; no SCP; direct routing | B |
| | Discovery using NRF services; no SCP; direct routing | |
| Indirect communication | Discovery using NRF services; selection for specific instance from the Set can be delegated to SCP. Routing via SCP | C |
| Indirect communication | | |
| | Discovery using NRF services; selection for a specific instance from the set can be delegated to the SCP; routing via SCP | |
| | Discovery and associated selection delegated to an SCP using discovery and selection parameters in service request; routing via SCP | D |
| | Discovery and associated selection delegated to an SCP using discovery and selection parameters in a service request; routing via SCP | |

In a scenario of the model A, no network repository function (network repository function, NRF) or SCP is needed. A network function consumer (NF Consumer) is locally configured with network profile (NF Profile) data of a network function producer (NF Producer), and may directly initiate communication after locally finding a peer NF (that is, the NF producer) through querying. The NRF and the SCP are not required for discovery of the peer end.

In a scenario of the model B, information about a peer NF is obtained via the NRF through service discovery. However, after the peer information is obtained, a message may be directly sent to the peer end without being forwarded via the SCP.

In a scenario of the model C, the NF consumer discovers a peer NF via the NRF and sends a message to the SCP for routing. If address information that is of a destination NF and that is carried in the message sent by the NF consumer to the SCP points to an NF set, the SCP needs to further query the target NF via the NRF.

In a scenario of the model D, the NF consumer needs to query and discover peer information and sends a request message to the SCP. The SCP interacts with the NRF to perform discovery and selection and routes the message to the finally selected NF producer.

### SUMMARY

Embodiments of this application provide an addressing method, an apparatus, and a device, to resolve a problem that a short message gateway needs to frequently interact with a core network element during obtaining of routing information of an MT terminal.

According to a first aspect, an embodiment of this application provides a communication method, including: A proxy network element receives a first request, where the first request includes first indication information, and the first indication information indicates the proxy network element to discover a unified data management UDM in a public land mobile network PLMN to which an MT terminal belongs. The proxy network element obtains an identifier of the PLMN to which the MT terminal belongs. The proxy network element obtains an address of the UDM of the PLMN based on the PLMN identifier.

In a possible implementation, the PLMN to which the MT terminal belongs is a current subscription PLMN of the MT terminal.

In a possible implementation, that the proxy network element obtains an identifier of the PLMN to which the MT terminal belongs includes: The proxy network element obtains, from mobile number portability MNP, the identifier of the PLMN to which the MT terminal belongs. Alternatively, the proxy network element determines, based on locally configured mobile subscriber number information of the proxy network element, that the MT terminal and the proxy network element belong to a same PLMN, and determines that the identifier of the PLMN to which the MT terminal belongs is an identifier of a PLMN to which the proxy network element belongs.

In a possible implementation, that the proxy network element obtains, from mobile number portability MNP, the identifier of the PLMN to which the MT terminal belongs includes: The proxy network element obtains, from the MNP based on second indication information in the first request, the identifier of the PLMN to which the MT terminal belongs, where the second indication information indicates the proxy network element to obtain the identifier of the PLMN to which the MT terminal belongs. Alternatively, if no mobile subscriber number information is configured in the proxy network element, the proxy network element obtains, from the MNP, the identifier of the PLMN to which the MT terminal belongs. Alternatively, the proxy network element determines, based on the locally configured mobile subscriber number information, that a mobile number holder PLMN of the MT terminal is different from the PLMN to which the proxy network element belongs.

In a possible implementation, the proxy network element is a service communication proxy network element SCP or a network repository function network element NRF.

In a possible implementation, that a proxy network element receives a first request includes: The SCP receives a first routing request sent by a short message gateway, where the first routing request is for obtaining routing information of the MT terminal. After the proxy network element obtains an address of the UDM of the PLMN based on the PLMN identifier, the method further includes: The SCP sends the first routing request to the UDM based on the address of the UDM, where the first routing request is for obtaining the routing information of the MT terminal. The SCP receives the routing information that is of the MT terminal and that is sent by the UDM, and sends the routing information of the terminal to the short message gateway.

In a possible implementation, the proxy network element is an SCP. That the proxy network element obtains, from mobile number portability MNP, the identifier of the PLMN to which the MT terminal belongs includes: The SCP sends a first discovery request to a network repository function network element NRF, to request an address of the MNP. The SCP receives a first discovery response sent by the NRF, where the first discovery response includes the address of the MNP. The SCP sends a query request to the MNP based on the address of the MNP, where the query request includes an identifier of the MT terminal. The SCP receives the identifier that is of the PLMN to which the MT terminal belongs and that is sent by the MNP.

In a possible implementation, that the proxy network element obtains an address of the UDM of the PLMN based on the PLMN identifier includes: The SCP sends a second discovery request to the NRF, where the second discovery request is for obtaining the address of the UDM of the PLMN. The proxy network element receives a second discovery response sent by the NRF, where the second discovery response includes the address of the UDM.

In a possible implementation, that a proxy network element receives a first request includes: The NRF receives the first request sent by an SCP. After the proxy network element obtains an address of the UDM of the PLMN based on the PLMN identifier, the method further includes: The NRF sends the address of the UDM to the SCP.

In a possible implementation, the proxy network element is an NRF. That the proxy network element obtains, from mobile number portability MNP, the identifier of the PLMN to which the MT terminal belongs includes: The NRF obtains, from the MNP that has registered with the NRF, the identifier of the PLMN to which the MT terminal belongs. Alternatively, the NRF sends a query request to an NRF in another PLMN, where the query request is for obtaining the identifier of the PLMN to which the MT terminal belongs, so that the NRF in the another PLMN obtains, from the MNP that has performed registration, the identifier of the PLMN to which the MT terminal belongs. The NRF receives a query response sent by the NRF in the another PLMN, where the query response includes the identifier of the PLMN to which the MT terminal belongs.

In a possible implementation, that the proxy network element obtains an address of the UDM of the PLMN based on the PLMN identifier includes: The NRF sends a third discovery request to an NRF in the PLMN based on the PLMN identifier, where the third discovery request is for obtaining the address of the UDM in the PLMN. The NRF receives the address that is of the UDM and that is sent by the NRF in the PLMN. Alternatively, if the PLMN identifier is an identifier of a PLMN to which the NRF belongs, the NRF determines an address of a UDM in the PLMN to which the NRF belongs.

According to a second aspect, an embodiment of this application provides an addressing method, including: A service communication proxy network element SCP sends a first request to a proxy network element, where first indication information indicates the proxy network element to discover a unified data management UDM in a public land mobile network PLMN to which an MT terminal belongs. The SCP receives an address that is of the UDM and that is sent by the proxy network element. The SCP obtains routing information of the MT terminal from the UDM based on the address of the UDM.

In a possible implementation, before an SCP sends a first request to a proxy network element, the method further includes: The SCP receives a routing request sent by a short message gateway, where the routing request is for obtaining the routing information of the MT terminal. After the SCP obtains routing information of the MT terminal from the UDM based on the address of the UDM, the method further includes: The SCP sends the routing information of the MT terminal to the short message gateway.

According to a third aspect, an embodiment of this application provides a communication apparatus. The apparatus includes modules/units that perform the method according to any one of the first aspect or the possible implementations of the first aspect. These modules/units may be implemented by hardware, or may be implemented by hardware executing corresponding software.

For example, the communication apparatus may include a transceiver module and a processing module. The transceiver module may be configured to perform information transceiver processing in each design solution of the first aspect, for example, receive a first request. The processing module is configured to: obtain an identifier of a PLMN to which an MT terminal belongs, obtain an address of a UDM of the PLMN based on the PLMN identifier, and the like.

According to a fourth aspect, an embodiment of this application provides a communication apparatus, including a processor, and a memory and a communication interface that are separately coupled to the processor. The communication interface is configured to communicate with another device. The processor is configured to run instructions or a program in the memory, to perform the method according to any one of the first aspect, the second aspect, or the possible implementations through the communication interface.

According to a fifth aspect, an embodiment of this application provides a computer-readable storage medium. The computer-readable storage medium stores computer-readable instructions, and when the computer-readable instructions are run on a computer, the method according to any one of the first aspect, the second aspect, or the possible implementations of the first aspect and the second aspect is performed.

According to a sixth aspect, an embodiment of this application provides a computer program product including instructions. When the instructions are run on a computer, the method according to any one of the first aspect, the second aspect, or the possible implementations of the first aspect and the second aspect is performed.

For technical effects that may be brought by any possible design of any one of the second aspect to the sixth aspect, refer to descriptions of technical effects that may be brought by any possible design of the first aspect. Details are not described herein again.

### BRIEF DESCRIPTION OF DRAWINGS

FIG. 1 is a schematic diagram of an SMS network architecture according to an embodiment of this application;
FIG. 2 is a schematic diagram of a service-based SMS procedure;
FIG. 3 is a schematic diagram of a network architecture applicable to this application according to an embodiment of this application;
FIG. 4 is a schematic flowchart of an addressing method according to an embodiment of this application;
FIG. 5 is a schematic flowchart of another addressing method according to an embodiment of this application;
FIG. 6 is a schematic flowchart of another addressing method according to an embodiment of this application;
FIG. 7 is a schematic flowchart of another addressing method according to an embodiment of this application;
FIG. 8 is a schematic flowchart of another addressing method according to an embodiment of this application;
FIG. 9 is a schematic flowchart of another addressing method according to an embodiment of this application;
FIG. 10 is a schematic flowchart of another addressing method according to an embodiment of this application;
FIG. 11 is a schematic flowchart of another addressing method according to an embodiment of this application;
FIG. 12 is a schematic flowchart of another addressing method according to an embodiment of this application;
FIG. 13 is a schematic diagram of a structure of a communication apparatus according to an embodiment of this application; and
FIG. 14 is a schematic diagram of a structure of a communication device according to an embodiment of this application.

### DESCRIPTION OF EMBODIMENTS

In a current protocol, a mobile terminated (MT) short message needs to be sent based on a routing short message of a mobile subscriber international ISDN number (mobile subscriber international ISDN/PSTN number, MSISDN) or a generic public subscription identifier (generic public subscription identifier, GPSI) of a short message receiver. Specifically, a short message gateway (SMS-GMSC) needs to identify a target PLMN, that is, a subscription PLMN of an MT terminal, and query routing information of a short message from a UDM of the target PLMN. For example, the short message needs to be sent to an SMSF, a serving GPRS support node (serving GPRS support node, SGSN), a mobility management entity (mobility management entity, MME), and the like.

The 3GPP CT4 working group is reconstructing a service-based short message network. To be specific, other short message network elements than a short message center (SMS-SC) are reconstructed as NFs and service-based interfaces. In this case, the SMS-GMSC needs to interact with a core network element for a plurality of times to obtain the target PLMN and address information of the UDM in the target PLMN, to query the routing information of the short message from the UDM of the target PLMN.

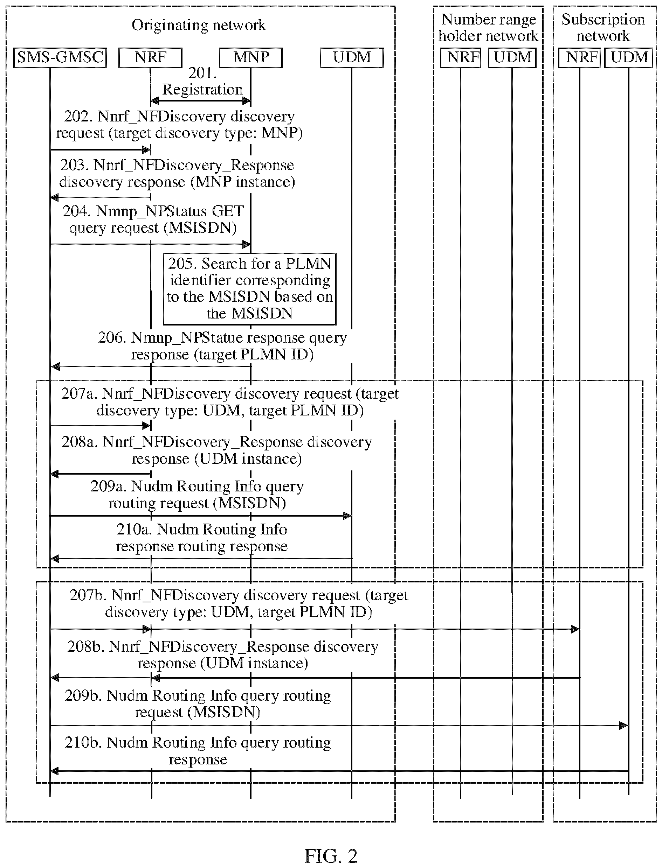

Specifically, a service-based SMS procedure may be that shown in FIG. 2. An originating network represents a subscription PLMN of a mobile originating (MO) terminal, a subscription network (subscription network) represents a subscription PLMN of an MT terminal, and a number range holder network (number range holder network) represents a PLMN that initially holds an MSISDN of the MT terminal. For example, if the MSISDN of the MT terminal has been ported out, a subscription PLMN corresponding to the MSISDN is different from the PLMN that initially holds the MSISDN. As shown in FIG. 2, the SMS procedure includes the following steps.

Step 201: A mobile number portability (Mobile Number Portability, MNP) registers with an NRF.

Step 202: An SMS-GMSC sends a discovery request (Nnrf_NFDiscovery) to the NRF. A target discovery type (target-nf-type) in the discovery request is the MNP, indicating to request information about the MNP.

Step 203: The NRF sends a discovery response (Nnrf_NFDiscovery_Response) to the SMS-GMSC. The response includes information about an MNP instance.

Step 204: The SMS-GMSC sends a query request (Nmnp_NPStatus GET) to the MNP. The query request includes an MSISDN of an MT terminal, to request an identifier of a subscription PLMN of the MT terminal.

Step 205: The MNP searches for the PLMN identifier corresponding to the MSISDN based on the MSISDN.

Step 206: The MNP sends a query response (Nmnp_NPStatue response) to the SMS-GMSC. The query response includes a target PLMN identifier (target PLMN ID), that is, the identifier of the subscription PLMN of the MT terminal.

If the PLMN identifier obtained by the SMS-GMSC indicates that the subscription PLMN of the MT terminal is the same as a subscription PLMN of an MO terminal, step 207a to step 210a are performed. Step 207a: The SMS-GMSC sends a discovery request (Nnrf_NFDiscovery) to the NRF. A target discovery type (target-nf-type) in the discovery request is a UDM, and the discovery request further includes the target PLMN identifier, that is, a PLMN identifier of an originating network, indicating to request information about the UDM of the target PLMN.

Step 208a: The NRF sends a discovery response to the SMS-GMSC. The response includes information about a UDM instance of the target PLMN.

Step 209a: The SMS-GMSC sends a routing request (Nudm routing info query) to the UDM in the originating network. The routing request includes the MSISDN of the MT terminal, to request routing information of the MT terminal.

Step 210a: The UDM in the originating network sends a routing response (Nudm routing info response) to the SMS-GMSC. The response includes the routing information of the MT terminal.

If the PLMN identifier obtained by the SMS-GMSC indicates that the subscription PLMN of the MT terminal is different from the subscription PLMN of the MO terminal, step 207b to step 210b are performed.

Step 207b: The SMS-GMSC sends a discovery request (Nnrf_NFDiscovery) to the NRF. A target discovery type (target-nf-type) in the discovery request is a UDM, and the discovery request further includes the target PLMN identifier, that is, a PLMN identifier of the subscription network shown in the figure, indicating to request information about a UDM of the target PLMN.

After receiving the discovery request, if the NRF determines that the target PLMN is not an originating PLMN, the NRF sends the discovery request to an NRF in the target PLMN, to request the information about the UDM in the target PLMN.

Step 208b: The NRF in the originating network receives a discovery response sent by the NRF in the target PLMN, and forwards the discovery response to the SMS-GMSC. The discovery response includes information about a UDM instance of the target PLMN.

Step 209b: The SMS-GMSC sends a routing request (Nudm routing info query) to the UDM in the target PLMN. The routing request includes the MSISDN of the MT terminal, to request routing information of the MT terminal.

Step 210b: The UDM in the target PLMN sends a routing response (Nudm routing info response) to the SMS-GMSC. The response includes the routing information of the MT terminal.

It can be learned that, in the current SMS procedure, the SMS-GMSC needs to frequently interact with a core network element to obtain the routing information of the MT terminal.

In a newly proposed eSBA architecture, an SCP is introduced, and four communication models shown in Table 1 are defined. However, for the communication model D, although it is proposed that the SCP or the NRF may obtain the PLMN identifier and the UDM information of the MT terminal, how to obtain the related information is not specified.

In view of this, embodiments of this application provide an addressing method, so that an SCP or an NRF obtains a PLMN identifier and UDM information that are related to an MT terminal.

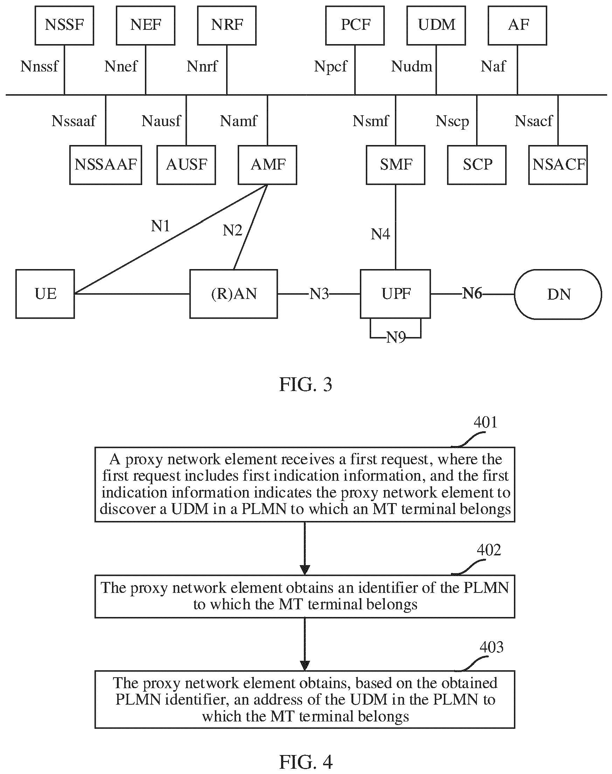

FIG. 3 provides an example of a network architecture applicable to an embodiment of this application. As shown in FIG. 3, the network architecture may include a terminal device, a radio access network (radio access network, RAN), an access and mobility management function (access and mobility management function, AMF), a session management function (session management function, SMF), a user plane function (user plane function, UPF), an application function (application function, AF), a policy control function (policy control function, PCF), a UDM, an SCP, an NRF, a data network (data network, DN), a network exposure function (network exposure function, NEF), a network slice selection function (network slice selection function, NSSF), an NSSAAF, an NSACF, an authentication server function (authentication server function, AUSF), and the like.

The terminal device is a device with a wireless transceiver function. The terminal device is connected to the radio access network in a wireless manner, to access a communication system. The terminal device may also be referred to as a terminal, UE, a mobile station, a mobile terminal, or the like (where the UE is used as an example in the figure). The terminal device may be a mobile phone, a tablet computer, a computer with a wireless transceiver function, a virtual reality terminal device, an augmented reality terminal device, a wireless terminal in industrial control, a wireless terminal in self-driving, a wireless terminal in remote surgery, a wireless terminal in a smart grid, a wireless terminal in transportation safety, a wireless terminal in a smart city, a wireless terminal in a smart home, or the like. A specific technology and a specific device form that are used by the terminal device are not limited in this embodiment of this application. As an example instead of a limitation, the terminal device may alternatively be a wearable device, such as glasses, gloves, a watch, clothing, and shoes. The wearable device is a portable device that is directly worn on a body or integrated into clothes or an accessory of a user. The wearable device is not merely a hardware device, but is used to implement a powerful function through software support, data exchange, and cloud interaction. The terminal device may alternatively be a vehicle-mounted module, a vehicle-mounted component, a vehicle-mounted chip, or a vehicle-mounted unit that is built in a vehicle as one or more components or units. The vehicle may implement the method in this application by using the vehicle-mounted module, the vehicle-mounted component, the vehicle-mounted chip, or the vehicle-mounted unit that is built in the vehicle. For ease of description, the terminal device is referred to as a "terminal" for short in the following embodiments of this application.

The RAN may also be referred to as an access network device or a base station, and is configured to connect the terminal device to a wireless network. The radio access network may be a base station (base station), an evolved NodeB (evolved NodeB, eNodeB) in an LTE system or an LTE-Advanced (LTE-Advanced, LTE-A) system, a next generation NodeB (next generation NodeB, gNB), a transmission reception point (transmission reception point, TRP), a base band unit (base band unit, BBU), a Wi-Fi access point (access point, AP) in a 5G communication system, a base station in a future mobile communication system, an access node in a Wi-Fi system, or the like. Alternatively, the radio access network may be a module or a unit that completes some functions of the base station, for example, may be a central unit (central unit, CU) or a distributed unit (distributed unit, DU). A specific technology and a specific device form that are used by the radio access network are not limited in this embodiment of this application. For example, in a network structure, the radio access network may be a CU node, a DU node, or a radio access network including a CU node and a DU node. Specifically, the CU node is configured to support protocols such as radio resource control (radio resource control, RRC), a packet data convergence protocol (packet data convergence protocol, PDCP), and a service data adaptation protocol (service data adaptation protocol, SDAP). The DU node is configured to support a radio link control (radio link control, RLC) layer protocol, a medium access control (medium access control, MAC) layer protocol, and a physical layer protocol.

An access and mobility management function network element is mainly configured for attachment, mobility management, a tracking area update procedure, and the like of the terminal device in a mobile network. In the 5G communication system, the access and mobility management function network element may be referred to as an AMF. In the future communication system (for example, a 6G communication system), the access and mobility management function network element may alternatively be a network element with another name that has the foregoing functions. This is not limited in this application.

A session management function network element is mainly configured for session management in the mobile network, for example, session establishment, modification, and release. Specific functions include, for example, assigning an internet protocol (internet protocol, IP) address to a terminal, selecting a user plane network element that provides a packet forwarding function, and the like. In the 5G communication system, the session management function network element may be referred to as an SMF. In the future communication system, the session management function network element may alternatively be a network element with another name that has the foregoing functions. This is not limited in this application.

A user plane function network element is mainly configured to process a user packet, for example, forwarding, charging, and lawful interception. In the 5G communication system, the user plane function network element may be referred to as a UPF. In the future communication system, the user plane function network element may alternatively be a network element with another name that has the foregoing functions. This is not limited in this application.

A policy control function network element includes a user subscription data management function, a policy control function, a charging policy control function, quality of service (quality of service, QoS) control, and the like. In the 5G communication system, the policy control function network element may be referred to as a PCF. In the future communication system, the policy control function network element may alternatively be a network element with another name that has the foregoing functions. This is not limited in this application.

A network slice selection function network element is mainly configured to select a proper network slice for a service of the terminal device. In the 5G communication system, the network slice selection function network element may be referred to as an NSSF. In the future communication system, the network slice selection function network element may alternatively be a network element with another name that has the foregoing functions. This is not limited in this application.

A network repository function network element is mainly configured to provide registration and discovery functions of a network element or a service provided by the network element. In the 5G communication system, the network repository function network element may be referred to as an NRF. In the future communication system, the network repository function network element may alternatively be a network element with another name that has the foregoing functions. This is not limited in this application.

A unified data management network element is mainly configured to manage subscription information of the terminal device. In the 5G communication system, the unified data management network element may be referred to as a UDM. In the future communication system, the unified data management network element may alternatively be a network element with another name that has the foregoing functions. This is not limited in this application.

An authentication server function network element is mainly configured to perform security authentication on the terminal device. In the 5G communication system, the authentication server function network element may be referred to as an AUSF. In the future communication system, the authentication server function network element may alternatively be a network element with another name that has the foregoing functions. This is not limited in this application.

A network exposure function network element can expose some functions of the network to an application in a controlled manner. In the 5G communication system, the network exposure function network element may be referred to as an NEF. In the future communication system, the network exposure function network element may alternatively be a network element with another name that has the foregoing functions. This is not limited in this application.

A service communication proxy network element is configured to support indirect communication, that is, message forwarding and routing between a service invoking network element and a service providing network element, selection and discovery of the service providing network element, and the like. In the 5G communication system, the service communication proxy network element may be referred to as an SCP. In the future communication system, the service communication proxy network element may alternatively be a network element with another name that has the foregoing functions. This is not limited in this application.

An application function network element may provide service data of various applications for a control plane network element in a communication network of an operator, or obtain data information and control information of the network from the control plane network element in the communication network. In the 5G communication system, the application function network element may be referred to as an AF. In the future communication system, the application function network element may alternatively be a network element with another name that has the foregoing functions. This is not limited in this application.

The data network is mainly configured to provide data transmission services for the terminal device. The data network may be a private network, for example, a local area network, may be a public data network (public data network, PDN), for example, the Internet (Internet), or may be a private network jointly deployed by operators, for example, a configured IP multimedia core network subsystem (IP multimedia core network subsystem, IMS) service.

The network element described in the foregoing network architecture may serve as a service invoking network element (that is, an NF consumer) or may serve as a service providing network element (that is, an NF producer). For example, the AMF may serve as a service providing network element to provide a service for the SMF, and the AMF may alternatively serve as a service invoking network element to invoke a service provided by the SMF.

It should be understood that FIG. 1 and FIG. 3 are merely examples of applicable network architectures, and an actually used network architecture may include more or fewer network elements than those in FIG. 1 and FIG. 3.

In embodiments of this application, a PLMN to which the terminal belongs may be a current subscription PLMN of the terminal. For example, if the terminal has handled a port-out service, a subscription PLMN of the terminal after the port-out service is used as a PLMN to which the terminal belongs, and a number range holder network of a phone number (that is, an MSISDN), that is, a PLMN that is before the port-out service, is no longer a PLMN to which the terminal belongs.

FIG. 4 is a schematic flowchart of an addressing method according to an embodiment of this application. As shown in the figure, the method may include the following steps.

Step 401: A proxy network element receives a first request, where the first request includes first indication information, and the first indication information indicates the proxy network element to discover a UDM in a PLMN to which an MT terminal belongs.

The proxy network element may be an SCP, and the first request received by the proxy network element may be a routing request sent by a short message gateway, where the routing request is for obtaining routing information of the MT terminal. The routing request may include information indicating to obtain the UDM in the PLMN to which the MT terminal belongs. For example, an HTTP custom header (HTTP custom header) in the routing request (Nudm_RoutingInfo_GetRequest) includes the following parameters: a network function discovery type (NF type): UDM (that is, the first indication information) and a service name (Service name): routing information (RoutingInfo). In addition, the routing request may include an MSISDN, a GPSI, or the like of the MT terminal. The foregoing parameters indicate to request to discover the UDM from which the routing information of the MT terminal can be obtained and to obtain the routing information of the MT terminal.

Alternatively, the proxy network element may be an NRF, and the first request received by the proxy network element may be a discovery request sent by an SCP, where the discovery request is for requesting to discover the UDM that stores subscription information of the MT terminal. For example, the discovery request (Nnrf_NFDiscovery) includes a network function discovery type (NF type): UDM, an identifier (for example, an MSISDN or a GPSI) of the MT terminal, and the like. The foregoing parameters indicate to request to discover the UDM from which the routing information of the MT terminal can be obtained.

Step 402: The proxy network element obtains an identifier of the PLMN to which the MT terminal belongs.

The UDM in the PLMN to which the MT terminal belongs is a UDM that can provide the routing information of the MT terminal. Therefore, to discover the UDM, the PLMN in which the UDM is located, that is, the PLMN to which the MT terminal belongs, needs to be first determined.

Further, the first request received by the proxy network element may further include second indication information, where the second indication information indicates the proxy network element to obtain the identifier of the PLMN to which the MT terminal belongs, so that the proxy network element more clearly knows the identifier of the PLMN to which the MT terminal belongs to be obtained. For example, a network element that sends the first request may first determine, based on the identifier of the MT terminal, whether the MT terminal is a subscription terminal of a local network (that is, a PLMN to which the network element that sends the first request and the proxy network element belong). If the MT terminal is not the subscription terminal of the local network, the second indication information is included in the first request, to indicate the proxy network element to obtain, from an MNP, the identifier of the PLMN to which the MT terminal belongs. For another example, a network element that sends the first request may alternatively not determine whether the MT terminal is a subscription terminal of a local network. The second indication information only indicates that the proxy network element needs to obtain the identifier of the PLMN to which the MT terminal belongs. How the proxy network element obtains the identifier is determined by the proxy network element.

The second indication information may be added to the HTTP custom header of the first request. For example, an MSISDN-PLMN field is added to the HTTP custom header of the first request, or may be added to another field of the first request. This is not limited in this embodiment of this application.

In some embodiments, the proxy network element may be preconfigured with information about the subscription terminal of the local network, for example, mobile subscriber number information (for example, the MSISDN) or the GPSI. In this case, the proxy network element may first determine, based on the configuration information and the identifier of the MT terminal, whether the MT terminal is the subscription terminal of the local network. If the MT terminal is the subscription terminal of the local network, the proxy network element determines the identifier of the PLMN to which the MT terminal belongs, that is, a PLMN identifier of the local network.

However, currently, most proxy network elements (SCPs or NRFs) are not configured with the information about the subscription terminal of the local network. In this case, the proxy network element may obtain, from the MNP, the identifier of the PLMN to which the MT terminal belongs. Alternatively, although the proxy network element is configured with the information about the subscription terminal of the local network, when the proxy network element determines, based on the identifier of the MT terminal and the configured information about the subscription terminal of the local network, that the MT terminal is not a subscription terminal of the local network, the proxy network element may alternatively obtain, through the MNP, the identifier of the PLMN to which the MT terminal belongs.

In addition, when obtaining, from the MNP, the identifier of the PLMN to which the MT terminal belongs, the proxy network element may further obtain number portability of the MT terminal. The number portability is a service in which a user can retain an old phone number of the user within a portability cluster to maintain contactability, and is commonly referred to as being "ported out". Alternatively, the proxy network element may query an MT terminal number holder network and the number portability of the MT terminal based on the identifier (for example, the MSISDN or the GPSI) of the MT terminal.

Step 403: The proxy network element obtains, based on the obtained PLMN identifier, an address of the UDM in the PLMN to which the MT terminal belongs.

After obtaining the identifier of the PLMN to which the MT terminal belongs, the proxy network element may obtain, by using a discovery service, the address of the UDM in the PLMN to which the MT terminal belongs.

The foregoing embodiment of this application provides an addressing method applicable to a communication model D in an eSBA architecture. The proxy network element queries the PLMN to which the MT terminal belongs, and performs a procedure of discovering the UDM in the PLMN to which the MT terminal belongs, to obtain the routing information of the MT terminal from the UDM to complete sending of a short message. The PLMN and the UDM are queried by using the proxy network element, so that a plurality of interactions between the short message gateway and a core network element are reduced. This helps simplify a short message service procedure. In addition, the foregoing solution uses the discovery service that has been defined and widely used, so that the foregoing solution is easy to implement.

As described above, the proxy network element may be the SCP. If the first request that is sent by the short message gateway and that is received by the SCP in step 401 is a request that includes the first indication information and that is for obtaining the routing information of the MT terminal, after the SCP obtains the address of the UDM in the PLMN to which the MT terminal belongs, the SCP may send, based on the obtained address of the UDM, a first routing request to the UDM in the PLMN to which the MT terminal belongs, to request the routing information of the MT terminal. After the routing information of the MT terminal is received, the routing information of the MT terminal is sent to the short message gateway, so that the short message gateway sends a short message based on the routing information of the MT terminal.

If the proxy network element is the SCP, when the SCP performs step 402, the SCP may obtain, from the MNP, the identifier of the PLMN to which the MT terminal belongs, or when the information about the subscription terminal of the local network is configured in the SCP and the MT terminal is the subscription terminal of the local network, the SCP may determine that the identifier of the PLMN to which the MT terminal belongs is the PLMN identifier of the local network.

If the SCP needs to obtain, from the MNP, the identifier of the PLMN to which the MT terminal belongs, in a possible design, the SCP may send a first discovery request to an NRF in the local network, where the first discovery request is for requesting an address of the MNP. Correspondingly, after receiving the first discovery request, the NRF in the local network may include, based on information about the MNP that has registered with the NRF, the address of the MNP in a first discovery response and send the first discovery response to the SCP. Further, if the SCP has obtained the address of the MNP in previous communication, the SCP may directly communicate with the MNP based on the stored address of the MNP, and does not need to obtain the address of the MNP repeatedly via the NRF.

Then, the SCP may send a request to the MNP to obtain the identifier of the PLMN to which the MT terminal belongs. For example, the SCP sends the request (for example, an Nmnp_NPStatus message) to the MNP. The request includes the identifier (for example, the MSISDN or the GPSI) of the MT terminal. The MNP determines, based on the identifier of the MT terminal, the PLMN to which the MT terminal belongs, and sends the identifier of the PLMN to which the MT terminal belongs to the SCP.

If the proxy network element is the SCP, when the SCP performs step 403, the SCP may obtain, based on the obtained identifier of the PLMN, the address of the UDM in the PLMN to which the MT terminal belongs. Specifically, the SCP may send a second discovery request to the NRF in the local network, to request the address of the UDM in the PLMN to which the MT terminal belongs. For example, the second discovery request (for example, an Nnrf_NFDiscovery message) includes the PLMN identifier and the NF type: UDM parameter, indicating to request to discover a UDM in a PLMN corresponding to the PLMN identifier. If the PLMN identifier in the second discovery request is the PLMN identifier of the local network, the NRF in the local network may determine an address of a UDM in the local network based on configured information, include the address of the UDM in the local network in a second discovery response, and send the second discovery response to the SCP. If the PLMN identifier in the second discovery request is not the PLMN identifier of the local network, the NRF in the local network sends, based on the PLMN identifier in the second discovery request, a discovery request to an NRF in a PLMN (that is, a target PLMN) corresponding to the identifier. The discovery request also includes the NF type: UDM parameter, to request information about a UDM in the target PLMN. The NRF in the target PLMN sends a discovery response to the NRF in the local network. The response includes an address of the UDM in the target PLMN. Then, the NRF in the local network sends a second discovery response to the SCP. The second discovery response includes the address of the UDM in the target PLMN.

Alternatively, if the SCP has obtained the address of the UDM in the PLMN in the previous communication, the SCP may directly communicate with the UDM based on the stored address of the UDM, and does not need to obtain the address of the UDM again via the NRF.

As described above, the proxy network element may alternatively be the NRF. After performing step 403, the NRF may send the obtained address of the UDM in the PLMN to which the MT terminal belongs to the SCP, so that the SCP can obtain the routing information of the MT terminal from the UDM based on the address of the UDM in the PLMN to which the MT terminal belongs.

When performing step 402, the NRF may obtain, from the MNP, the identifier of the PLMN to which the MT terminal belongs, or when the information about the subscription terminal of the local network is configured in the NRF and the MT terminal is the subscription terminal of the local network, the NRF may alternatively determine, based on the identifier (for example, the MSISDN or the GPSI) of the MT terminal, that the MT terminal is the subscription terminal of the local network, that is, the identifier of the PLMN to which the MT terminal belongs is the PLMN identifier of the local network. Further, before this embodiment of this application is performed, the MNP may complete registration with the NRF, so that when the NRF needs to obtain, from the MNP, the identifier of the PLMN to which the MT terminal belongs, the NRF can determine an address of the MNP based on registration information, and send a request to the MNP for obtaining the identifier of the PLMN to which the MT terminal belongs. For example, the NRF sends the request (for example, an Nmnp_NPStatus message) to the MNP. The request includes the identifier (for example, the MSISDN or the GPSI) of the MT terminal. The MNP determines, based on the identifier of the MT terminal, the PLMN to which the MT terminal belongs, and sends the identifier of the PLMN to which the MT terminal belongs to the NRF.

When the NRF performs step 403, if the obtained identifier of the PLMN to which the MT terminal belongs is the PLMN identifier of the local network, the NRF may directly obtain the address of the UDM in the local network based on preconfigured information. If the obtained identifier of the PLMN to which the MT terminal belongs is not the PLMN identifier of the local network, an NRF in the local network may send, based on the identifier of the PLMN to which the MT terminal belongs, a discovery request to an NRF in a PLMN (that is, the target PLMN) corresponding to the identifier. The discovery request includes the NF type: UDM parameter, to request the information about the UDM in the target PLMN. Further, the discovery request may further include another parameter carried in the first request, for example, one or more of the service name (Service name) and the terminal identifier (for example, the MSISDN or the GPSI). The NRF in the target PLMN sends a discovery response to the NRF in the local network, where the response includes the address of the UDM in the target PLMN.

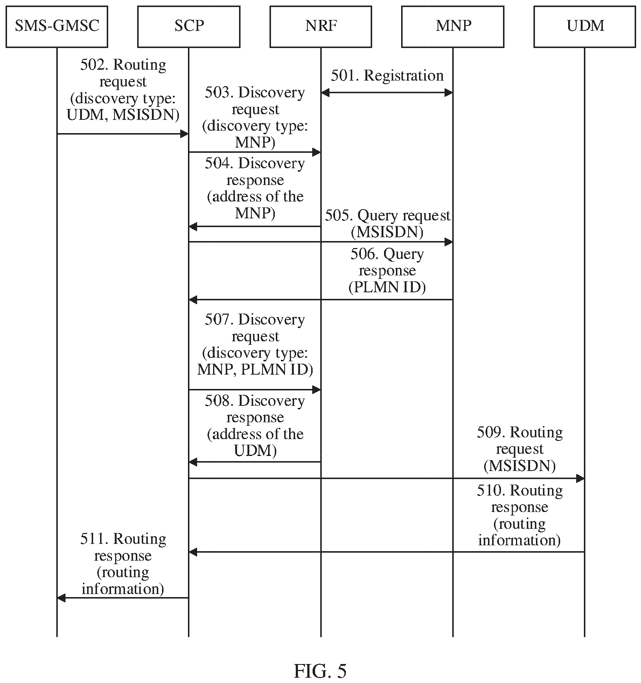

To understand the foregoing embodiment of this application more clearly, examples are provided below for description with reference to FIG. 5 to FIG. 12. In the following embodiments, an MSISDN is used as an example of a terminal identifier. It should be understood that the MSISDN in the following embodiments may alternatively be replaced with a GPSI or another terminal identifier.

FIG. 5 provides an example of an SMS procedure, where the addressing method in the foregoing embodiment is performed by an SCP. In a specific embodiment shown in FIG. 5, the SCP is not configured with information about a subscription terminal of a local network, and an MT terminal is the subscription terminal of the local network. In this embodiment, a PLMN to which an MO terminal belongs is referred to as an originating network, and MNP is deployed in the originating network. As shown in the figure, the procedure may include the following steps.

Step 501: The MNP registers with an NRF.

Step 502: An SMS-GMSC sends a routing request to the SCP. The routing request is the first request in the foregoing embodiment, and the first request includes an NF type: UDM (that is, the first indication information in the foregoing embodiment). Further, the first request may further include one or more of the following parameters: a service name (Service name): routing information (RoutingInfo), an identifier of the MT terminal, and a PLMN indication (the second indication information in the foregoing embodiment).

Step 503: The SCP sends a discovery request to the NRF. The discovery request includes an NF type (discovery type): MNP, indicating to request to discover the MNP, that is, request an address of the MNP.

Further, the discovery request may further include some or all information included in the first request.

Step 504: The NRF sends a discovery response to the SCP, where the discovery response includes the address of the MNP.

Specifically, the address of the MNP may be a fully qualified domain name (fully qualified domain name, FQDN) address or an IP address of the MNP.

Step 505: The SCP sends a query request to the MNP, where the query request includes an MSISDN of the MT terminal, to request an identifier of a PLMN to which the MT terminal belongs.

Step 506: The MNP sends a query response to the SCP, where the query response includes an identifier of a target PLMN, that is, the identifier of the PLMN to which the MT terminal belongs.

Specifically, the MNP may search for, based on the MSISDN of the MT terminal, the identifier of the PLMN to which the MT terminal belongs. In the specific embodiment shown in FIG. 5, the MNP determines that the MT terminal is the subscription terminal of the local network, that is, the MT terminal, the MO terminal, the SMS-GMSC, the SCP, and the NRF belong to a same PLMN.

Step 507: The SCP sends a discovery request to the NRF, where the discovery request includes the NF type: UDM, the identifier (ID) of the target PLMN, indicating to request information about the UDM of the target PLMN. Further, the discovery request may further include some or all of the parameters included in the routing request in step 502.

Step 508: The NRF sends a discovery response to the SCP, where the discovery response includes an address of the UDM.

Because the target PLMN is the local network, the NRF determines the address of the UDM in the local network based on stored information, and sends the address of the UDM in the local network to the SCP.

Step 509: The SCP sends a routing request to the UDM, where the routing request includes the MSISDN of the MT terminal. Further, the discovery request may further include some or all of the parameters included in the routing request in step 502.

Step 510: The UDM sends a routing response to the SCP, where the routing response includes routing information of the MT terminal.

Step 511: The SCP sends a routing response to the SMS-GMSC. The response includes the routing information of the MT terminal.

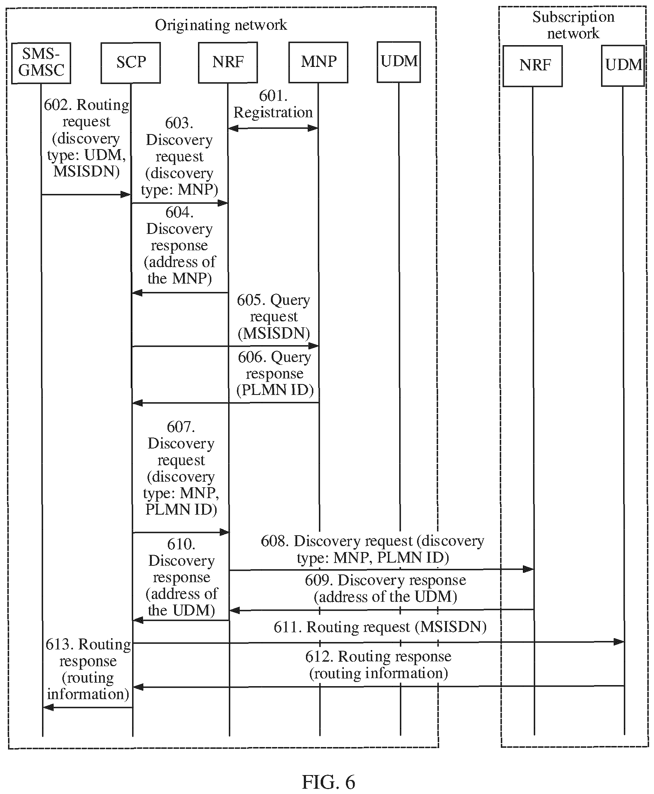

FIG. 6 provides an example of an SMS procedure. An SCP performs the addressing method in the foregoing embodiment. In a specific embodiment shown in FIG. 6, the SCP is not configured with information about a subscription terminal of a local network, and an MT terminal and an MO terminal belong to different PLMNs. In this embodiment, a PLMN to which the MO terminal belongs is referred to as an originating network, MNP is deployed in the originating network, and a PLMN to which the MT terminal belongs is referred to as a subscription network (Subscription Network).

As shown in FIG. 6, the procedure may include the following steps.

Step 601 to step 605 are similar to step 501 to step 505, and details are not described herein again.

Step 606: The MNP sends a query response to the SCP, where the query response includes an identifier of a target PLMN, that is, the identifier of the PLMN to which the MT terminal belongs.

Specifically, the MNP may search for, based on the MSISDN of the MT terminal, the identifier of the PLMN to which the MT terminal belongs. In the specific embodiment shown in FIG. 6, the MNP determines that the MT terminal and the MO terminal belong to different PLMNs. In the figure, the PLMN to which the MT terminal belongs is referred to as the subscription network.

In the embodiment shown in FIG. 6, the MT terminal may be a terminal that has undergone a port-out service, that is, a number range holder network of the MT terminal is not the current subscription network. Alternatively, the MT terminal may be a terminal that has not undergone the port-out service, that is, the subscription network is the number range holder network of the MT terminal.

Step 607: The SCP sends a discovery request to the NRF in the local network, where the discovery request includes the NF type: UDM, the identifier of the PLMN to which the MT terminal belongs, indicating to request information about a UDM in the PLMN corresponding to the PLMN identifier. Further, the discovery request may further include some or all of the parameters included in the routing request in step 602.

Step 608: The NRF in the local network forwards the discovery request in step 607 to an NRF in the subscription network.

Specifically, the NRF in the local network determines, based on the identifier of the PLMN to which the MT terminal belongs, an NRF in the PLMN to which the MT terminal belongs, and forwards the discovery request in step 607 to the NRF in the PLMN to which the MT terminal belongs.

Step 609: The NRF in the subscription network sends a discovery response to the NRF in the local network, where the discovery response includes an address of the UDM in the subscription network.

Step 610: The NRF in the local network forwards the discovery response in step 609 to the SCP.

Step 611: The SCP sends a routing request to the UDM in the subscription network, where the routing request includes the MSISDN of the MT terminal. Further, the discovery request may further include some or all of the parameters included in the routing request in step 602.

Step 612: The UDM in the subscription network sends a routing response to the SCP, where the routing response includes routing information of the MT terminal.

Step 613: The SCP sends a routing response to the SMS-GMSC. The response includes the routing information of the MT terminal.

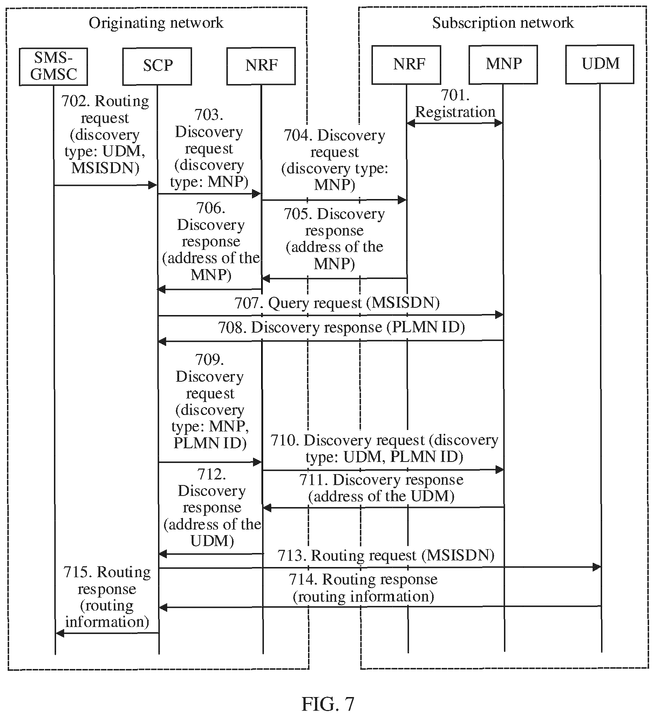

FIG. 7 provides an example of an SMS procedure. An SCP performs the addressing method in the foregoing embodiment. In a specific embodiment shown in FIG. 7, the SCP is not configured with information about a subscription terminal of a local network, and an MT terminal and an MO terminal belong to different PLMNs. In this embodiment, a PLMN to which the MO terminal belongs is referred to as an originating network, no MNP is deployed in the originating network, and the MT terminal has not undergone a port-out service. Therefore, a number range holder network of the MT terminal is a PLMN to which the MT terminal currently belongs, that is, the number range holder network of the MT terminal is a subscription network of the MT terminal, and the MNP is deployed in the network of the MT terminal.

Step 701: The MNP in the subscription network registers with an NRF in the subscription network.

Step 702: An SMS-GMSC in the originating network sends a routing request to the SCP in the originating network. The routing request is the first request in the foregoing embodiment, and the first request includes an NF type: UDM (that is, the first indication information in the foregoing embodiment). Further, the first request may further include one or more of the following parameters: a service name (Service name): routing information (RoutingInfo), an MSISDN of the MT terminal, and a PLMN indication (the second indication information in the foregoing embodiment). In FIG. 7, an example in which the MSISDN of the MT terminal is included is used.

Step 703: The SCP in the originating network sends a discovery request to an NRF in the originating network. The discovery request includes an NF type: MNP, indicating to request to discover the MNP, that is, request an address of the MNP.

Further, the discovery request may further include some or all information included in the first request.

Step 704: The NRF in the originating network forwards the discovery request to the NRF in the subscription network.

Step 705: The NRF in the subscription network sends a discovery response to the NRF in the originating network, where the discovery response includes the address of the MNP that registers with the number range holder network.

Step 706: The NRF in the originating network forwards the discovery response to the SCP in the originating network. Further, the discovery request may further include some or all of the parameters included in the routing request in step 702.

Step 707: The SCP in the originating network sends a query request to the MNP in the subscription network, where the query request includes the MSISDN of the MT terminal, to request an identifier of the PLMN to which the MT terminal belongs.

Step 708: The MNP in the subscription network sends a query response to the SCP in the originating network, where the query response includes an identifier of a target PLMN, that is, the identifier of the PLMN to which the MT terminal belongs.

Specifically, the MNP may search for, based on the MSISDN of the MT terminal, the identifier of the PLMN to which the MT terminal belongs. In the specific embodiment shown in FIG. 7, because the MT terminal has not undergone the port-out service, the PLMN to which the MT terminal belongs is the number range holder network of the MT terminal.

Step 709 to step 715 are similar to step 607 to step 613 in the foregoing embodiment, and details are not described herein again.

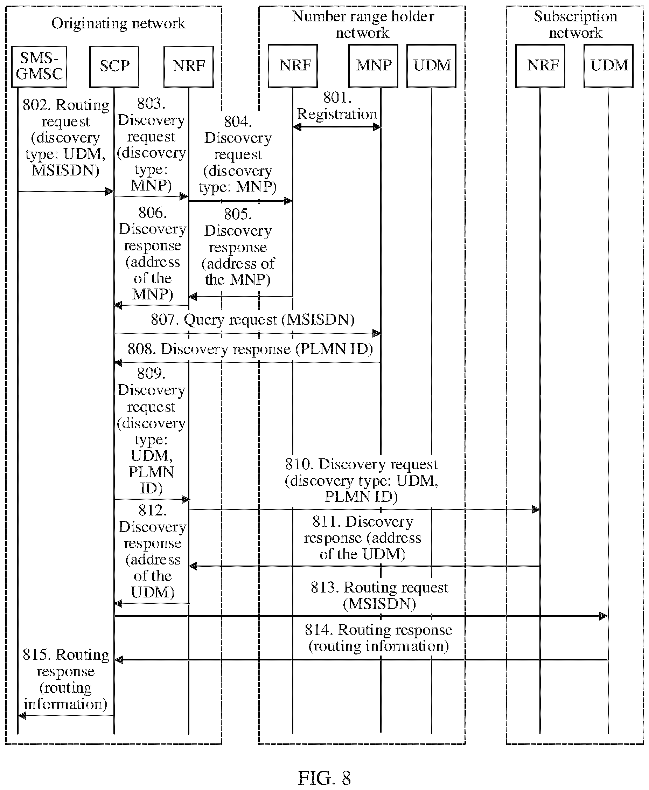

FIG. 8 provides an example of an SMS procedure. An SCP performs the addressing method in the foregoing embodiment. In a specific embodiment shown in FIG. 8, the SCP is not configured with information about a subscription terminal of a local network, an MT terminal and an MO terminal belong to different PLMNs, and the MT terminal has undergone a port-out service. In this embodiment, a PLMN to which the MO terminal belongs is referred to as an originating network, a PLMN to which the MT terminal belongs is referred to as a subscription network, and a PLMN to which the MT terminal belongs before the MT terminal has undergone the port-out service is referred to as a number range holder network. No MNP is deployed in the originating network, and the MNP is deployed in the number range holder network.

As shown in FIG. 8, the procedure may include the following steps.

Step 801: The MNP in the number range holder network registers with an NRF in the number range holder network.

Step 802: An SMS-GMSC in the originating network sends a routing request to the SCP in the originating network. The routing request is the first request in the foregoing embodiment, and the first request includes an NF type: UDM (that is, the first indication information in the foregoing embodiment). Further, the first request may further include one or more of the following parameters: a service name (Service name): routing information (RoutingInfo), an MSISDN of the MT terminal, and a PLMN indication (the second indication information in the foregoing embodiment). In FIG. 8, an example in which the MSISDN of the MT terminal is included is used.

Step 803: The SCP in the originating network sends a discovery request to an NRF in the originating network. The discovery request includes an NF type: MNP, indicating to request to discover the MNP, that is, request an address of the MNP.

Further, the discovery request may further include some or all information included in the first request.

Step 804: The NRF in the originating network forwards the discovery request to the NRF in the number range holder network.

Step 805: The NRF in the number range holder network sends a discovery response to the NRF in the originating network, where the discovery response includes the address of the MNP that registers with the number range holder network.

Step 806: The NRF in the originating network forwards the discovery response to the SCP in the originating network.

Step 807: The SCP in the originating network sends a query request to the MNP in the number range holder network, where the query request includes the MSISDN of the MT terminal, to request an identifier of the PLMN to which the MT terminal belongs. Further, the discovery request may further include some or all of the parameters included in the routing request in step 802.

Step 808: The MNP in the number range holder network sends a query response to the SCP in the originating network, where the query response includes an identifier of a target PLMN, that is, the identifier of the PLMN to which the MT terminal belongs.

Specifically, the MNP may search for, based on the MSISDN of the MT terminal, the identifier of the PLMN to which the MT terminal belongs. In the specific embodiment shown in FIG. 8, because the MT terminal has undergone the port-out service, the PLMN to which the MT terminal belongs is not the number range holder network of the MT terminal.

Step 809: The SCP in the originating network sends a discovery request to the NRF in the originating network, where the discovery request includes the NF type: UDM, the identifier of the PLMN to which the MT terminal belongs, indicating to request information about a UDM in the PLMN corresponding to the PLMN identifier. Further, the discovery request may further include some or all of the parameters included in the routing request in step 802.

Step 810: The NRF in the originating network forwards the discovery request in step 809 to an NRF in the subscription network.

Specifically, the NRF in the originating network determines, based on the identifier of the PLMN to which the MT terminal belongs, an NRF in the PLMN to which the MT terminal belongs, and forwards the discovery request in step 809 to the NRF in the PLMN to which the MT terminal belongs.

Step 811: The NRF in the subscription network sends a discovery response to the NRF in the originating network, where the discovery response includes an address of the UDM in the subscription network.

Step 812: The NRF in the originating network forwards the discovery response in step 811 to the SCP in the originating network.

Step 813: The SCP in the originating network sends a routing request to the UDM in the subscription network, where the routing request includes the MSISDN of the MT terminal. Further, the discovery request may further include some or all of the parameters included in the routing request in step 802.

Step 814: The UDM in the subscription network sends a routing response to the SCP in the originating network, where the routing response includes routing information of the MT terminal.

Step 815: The SCP sends a routing response to the SMS-GMSC. The response includes the routing information of the MT terminal.

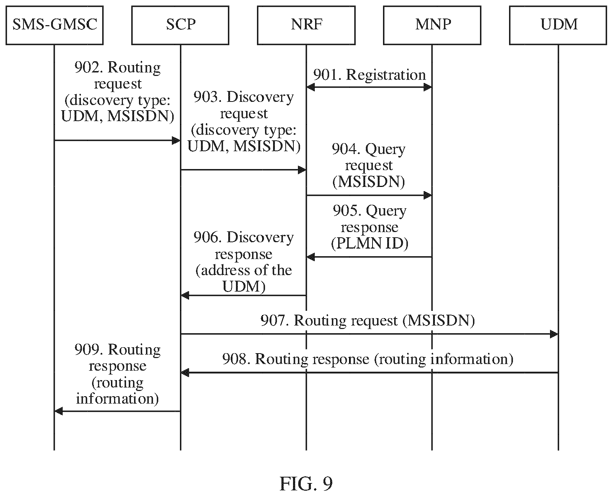

FIG. 9 provides an example of an SMS procedure. An NRF performs the addressing method in the foregoing embodiment. In a specific embodiment shown in FIG. 9, the NRF is not configured with information about a subscription terminal of a local network, and an MT terminal is the subscription terminal of the local network. In this embodiment, a PLMN to which an MO terminal belongs is referred to as an originating network, and MNP is deployed in the originating network. As shown in the figure, the procedure may include the following steps.

Step 901: The MNP registers with the NRF.

Step 902: A SMS-GMSC sends a routing request to an SCP. The routing request is the first request in the foregoing embodiment, and the first request includes an NF type: UDM (that is, the first indication information in the foregoing embodiment). Further, the first request may further include one or more of the following parameters: a service name (Service name): routing information (RoutingInfo), an MSISDN of the MT terminal, and a PLMN indication (the second indication information in the foregoing embodiment). In FIG. 9, an example in which the MSISDN of the MT terminal is included is used.

Step 903: The SCP sends a discovery request to the NRF. The discovery request includes the NF type: UDM, the MSISDN of the MT terminal, indicating to request to discover an address of a UDM that can provide routing information of the MT terminal.

Further, the discovery request may further include some or all information included in the first request.

Step 904: The NRF sends a query request to the MNP, where the query request includes the MSISDN of the MT terminal, to request an identifier of a PLMN to which the MT terminal belongs.

Step 905: The MNP sends a query response to the NRF, where the query response includes an identifier of a target PLMN, that is, the identifier of the PLMN to which the MT terminal belongs.

Specifically, the MNP may search for, based on the MSISDN of the MT terminal, the identifier of the PLMN to which the MT terminal belongs. In the specific embodiment shown in FIG. 9, the MNP determines that the MT terminal is the subscription terminal of the local network, that is, the MT terminal, the MO terminal, the SMS-GMSC, the SCP, and the NRF belong to a same PLMN.

Step 906: The NRF sends a discovery response to the SCP, where the discovery response includes the address of the UDM.

Because the PLMN to which the MT terminal belongs is the originating network, the NRF determines the address of the UDM in the local network based on stored information, and sends the address of the UDM to the SCP.

Step 907: The SCP sends a routing request to the UDM, where the routing request includes the MSISDN of the MT terminal. Further, the discovery request may further include some or all of the parameters included in the routing request in step 902.

Step 908: The UDM sends a routing response to the SCP, where the routing response includes routing information of the MT terminal.

Step 909: The SCP sends a routing response to the SMS-GMSC. The response includes the routing information of the MT terminal.

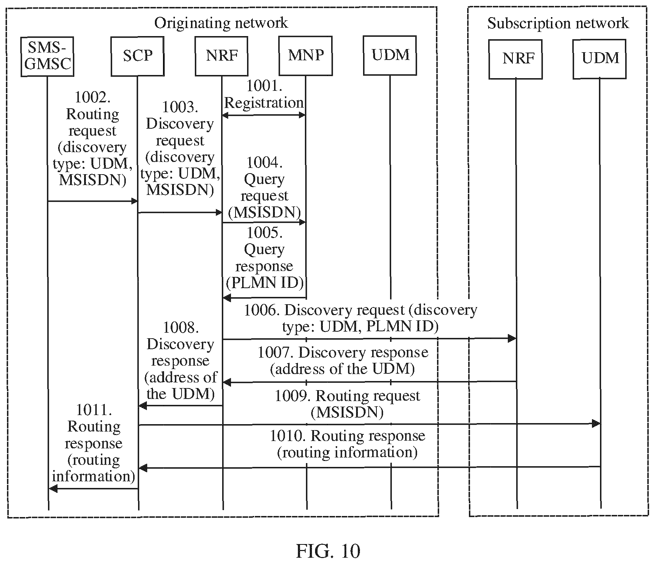

FIG. 10 provides an example of an SMS procedure. An NRF performs the addressing method in the foregoing embodiment. In a specific embodiment shown in FIG. 10, the NRF is not configured with information about a subscription terminal of a local network, and an MT terminal and an MO terminal belong to different PLMNs. In this embodiment, a PLMN to which the MO terminal belongs is referred to as an originating network, MNP is deployed in the originating network, and a PLMN to which the MT terminal belongs is referred to as a subscription network. As shown in the figure, the procedure may include the following steps.

Step 1001 to step 1005 are consistent with step 901 to step 905 in the foregoing embodiment, and details are not described herein again.

Step 1006: The NRF in the originating network sends a discovery request to an NRF in the subscription network, where the discovery request includes the NF type: UDM, indicating to request information about the UDM in the subscription network.

Specifically, the NRF in the originating network sends, based on the obtained identifier of the PLMN to which the MT terminal belongs, the discovery request to the NRF in the PLMN corresponding to the identifier. Further, the discovery request may further include some or all of the parameters included in the routing request in step 1002.

Step 1007: The NRF in the subscription network sends a discovery response to the NRF in the originating network, where the discovery response includes an address of the UDM in the subscription network.

Step 1008: The NRF in the originating network sends a discovery response to the SCP, where the discovery response includes the address of the UDM in the subscription network.

Step 1009: The SCP in the originating network sends a routing request to the UDM in the subscription network, where the routing request includes the MSISDN of the MT terminal. Further, the discovery request may further include some or all of the parameters included in the routing request in step 1002.

Step 1010: The UDM in the subscription network sends a routing response to the SCP in the originating network, where the routing response includes routing information of the MT terminal.

Step 1011: The SCP in the originating network sends a routing response to the SMS-GMSC in the originating network. The response includes the routing information of the MT terminal.

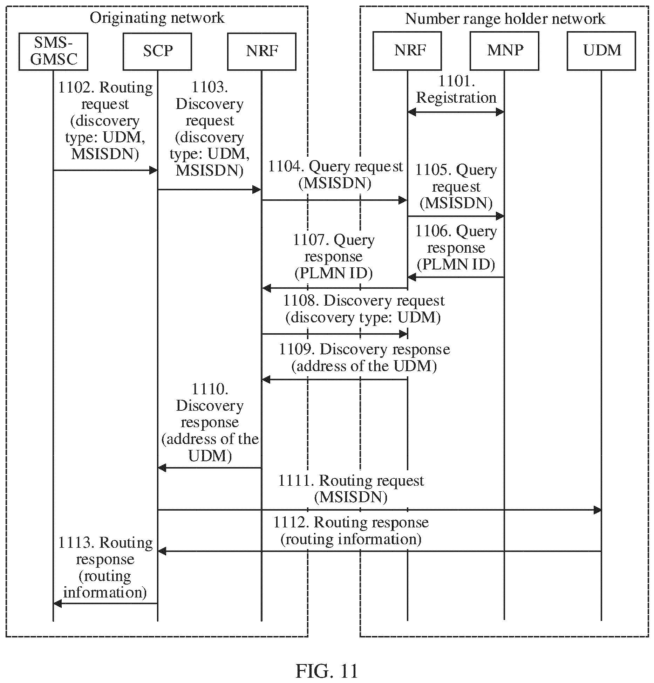

FIG. 11 provides an example of an SMS procedure. An NRF performs the addressing method in the foregoing embodiment. In a specific embodiment shown in FIG. 11, the NRF is not configured with information about a subscription terminal of a local network, and an MT terminal and an MO terminal belong to different PLMNs. In this embodiment, a PLMN to which the MO terminal belongs is referred to as an originating network, no MNP is deployed in the originating network, and the MT terminal has not undergone a port-out service. Therefore, a number range holder network of the MT terminal is a PLMN to which the MT terminal currently belongs, and the MNP is deployed in the number range holder network.

Step 1101: The MNP in the number range holder network registers with an NRF in the number range holder network.

Step 1102: An SMS-GMSC in the originating network sends a routing request to an SCP in the originating network. The routing request is the first request in the foregoing embodiment, and the first request includes an NF type: UDM (that is, the first indication information in the foregoing embodiment). Further, the first request may further include one or more of the following parameters: a service name (Service name): routing information (RoutingInfo), an MSISDN of the MT terminal, and a PLMN indication (the second indication information in the foregoing embodiment). In FIG. 11, an example in which the MSISDN of the MT terminal is included is used.

Step 1103: The SCP in the originating network sends a discovery request to an NRF in the originating network. The discovery request includes the NF type: UDM, indicating to request to discover a UDM that can provide routing information of the MT terminal. Further, the discovery request may further include some or all of the parameters included in the routing request in step 1102.

Step 1104: The NRF in the originating network sends a query request to the NRF in the number range holder network, where the query request includes the MSISDN of the MT terminal, to request the NRF in the number range holder network to query, through the MNP, an identifier of the PLMN to which the MT terminal belongs. Further, the discovery request may further include some or all of the parameters included in the routing request in step 1102.

Step 1105: The NRF in the number range holder network sends a query request to the MNP in the number range holder network, where the query request includes the MSISDN of the MT terminal, to request the identifier of the PLMN to which the MT terminal belongs. Further, the discovery request may further include some or all of the parameters included in the routing request in step 1102.

Step 1106: The MNP in the number range holder network sends a query response to the NRF in the number range holder network, where the query response includes the identifier of the PLMN to which the MT terminal belongs.

Specifically, the MNP may search for, based on the MSISDN of the MT terminal, the identifier of the PLMN to which the MT terminal belongs. In the specific embodiment shown in FIG. 11, because the MT terminal has not undergone the port-out service, the PLMN to which the MT terminal belongs is the number range holder network of the MT terminal.

Step 1107: The NRF in the number range holder network sends a query response to the NRF in the originating network, where the query response includes the identifier of the PLMN to which the MT terminal belongs.

Step 1108: The NRF in the originating network sends a discovery request to the NRF in the number range holder network, where the discovery request includes the NF type: UDM, indicating to request information about the UDM in the subscription network.

Specifically, the NRF in the originating network sends, based on the obtained identifier of the PLMN to which the MT terminal belongs, the discovery request to the NRF in the PLMN corresponding to the identifier. Further, the discovery request may further include some or all of the parameters included in the routing request in step 1102.

Step 1109: The NRF in the number range holder network sends a discovery response to the NRF in the originating network, where the discovery response includes an address of the UDM in the subscription network.

Step 1110: The NRF in the originating network sends a discovery response to the SCP, where the discovery response includes the address of the UDM in the subscription network.

Step 1111: The SCP in the originating network sends a routing request to the UDM in the number range holder network, where the routing request includes the MSISDN of the MT terminal. Further, the discovery request may further include some or all of the parameters included in the routing request in step 1102.

Step 1112: The UDM in the number range holder network sends a routing response to the SCP in the originating network, where the routing response includes routing information of the MT terminal.

Step 1113: The SCP in the originating network sends a routing response to the SMS-GMSC in the originating network. The response includes the routing information of the MT terminal.

Optionally, to further simplify a signaling interaction procedure, step 1107 to step 1109 may be simplified as follows: After the NRF in the number range holder network receives the identifier that is of the PLMN to which the MT terminal belongs and that is sent by the MNP, if the NRF in the number range holder network determines that the PLMN to which the MT terminal belongs is the number range holder network, the NRF in the number range holder network determines the address of the UDM in the number range holder network, and then sends the query response to the NRF in the originating network, where the query response includes the address of the UDM in the number range holder network.

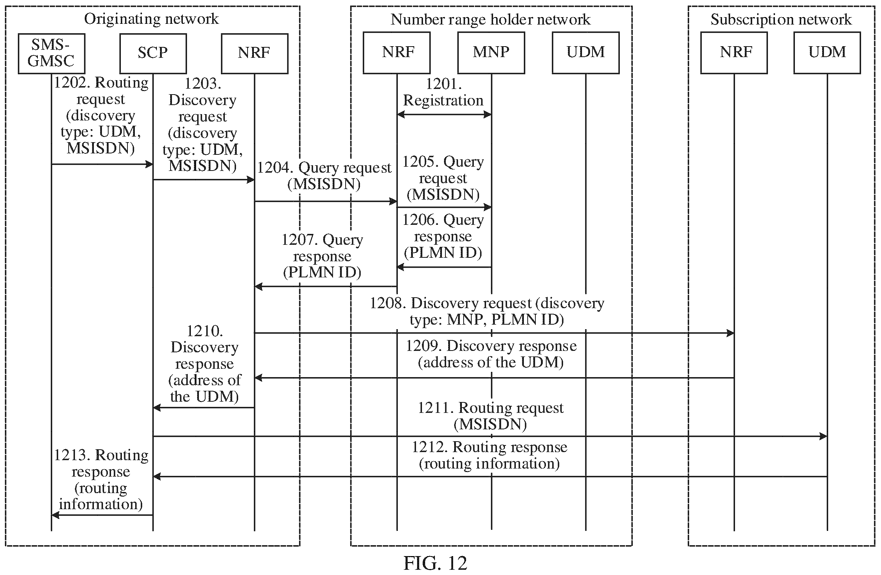

FIG. 12 provides an example of an SMS procedure. An NRF performs the addressing method in the foregoing embodiment. In a specific embodiment shown in FIG. 12, the NRF is not configured with information about a subscription terminal of a local network, an MT terminal and an MO terminal belong to different PLMNs, and the MT terminal has undergone a port-out service. In this embodiment, a PLMN to which the MO terminal belongs is referred to as an originating network, a PLMN to which the MT terminal belongs is referred to as a subscription network, and a PLMN to which the MT terminal belongs before the MT terminal has undergone the port-out service is referred to as a number range holder network. No MNP is deployed in the originating network, and the MNP is deployed in the number range holder network.

As shown in FIG. 12, the procedure may include the following steps.

Step 1201: The MNP in the number range holder network registers with an NRF in the number range holder network.

Step 1202: An SMS-GMSC in the originating network sends a routing request to an SCP in the originating network. The routing request is the first request in the foregoing embodiment, and the first request includes an NF type: UDM (that is, the first indication information in the foregoing embodiment). Further, the first request may further include one or more of the following parameters: a service name (Service name): routing information (RoutingInfo), an MSISDN of the MT terminal, and a PLMN indication (the second indication information in the foregoing embodiment). In FIG. 12, an example in which the MSISDN of the MT terminal is included is used.

Step 1203: The SCP in the originating network sends a discovery request to an NRF in the originating network. The discovery request includes the NF type: UDM, the MSISDN of the MT terminal, indicating to request to discover an address of a UDM that can provide routing information of the MT terminal.

Further, the discovery request may further include some or all information included in the first request.

Step 1204: The NRF in the originating network sends a query request to the NRF in the number range holder network. The query request includes the MSISDN of the MT terminal, to request the NRF in the number range holder network to query, through the MNP, an identifier of the PLMN to which the MT terminal belongs. Further, the discovery request may further include some or all of the parameters included in the routing request in step 1202.

Step 1205: The NRF in the number range holder network sends a query request to the MNP in the number range holder network, where the query request includes the MSISDN of the MT terminal, to request the identifier of the PLMN to which the MT terminal belongs. Further, the discovery request may further include some or all of the parameters included in the routing request in step 1202.

Step 1206: The MNP in the number range holder network sends a query response to the NRF in the number range holder network, where the query response includes the identifier of the PLMN to which the MT terminal belongs.

Specifically, the MNP may search for, based on the identifier of the MT terminal, the identifier of the PLMN to which the MT terminal belongs. In the specific embodiment shown in FIG. 12, because the MT terminal has undergone the port-out service, the PLMN to which the MT terminal belongs is not the number range holder network of the MT terminal.

Step 1207: The NRF in the number range holder network sends a query response to the NRF in the originating network, where the query response includes the identifier of the PLMN to which the MT terminal belongs.

Step 1208: The NRF in the originating network sends a discovery request to an NRF in the subscription network, where the discovery request includes the NF type: UDM, the identifier of the PLMN to which the MT terminal belongs, indicating to request information about the UDM in the PLMN corresponding to the PLMN identifier. Further, the discovery request may further include some or all of the parameters included in the routing request in step 1202.

Specifically, the NRF in the originating network determines, based on the identifier of the PLMN to which the MT terminal belongs, an NRF in the PLMN to which the MT terminal belongs, and sends, to the NRF, the discovery request for discovering the UDM.

Step 1209: The NRF in the subscription network sends a discovery response to the NRF in the originating network, where the discovery response includes an address of the UDM in the subscription network.

Step 1210: The NRF in the originating network sends a discovery response to the SCP in the originating network, where the discovery response includes the address of the UDM in the subscription network.

Step 1211: The SCP in the originating network sends a routing request to the UDM in the subscription network, where the routing request includes the MSISDN of the MT terminal. Further, the discovery request may further include some or all of the parameters included in the routing request in step 1202.

Step 1212: The UDM in the subscription network sends a routing response to the SCP in the originating network, where the routing response includes routing information of the MT terminal.

Step 1213: The SCP in the originating network sends a routing response to the SMS-GMSC in the originating network. The response includes the routing information of the MT terminal.

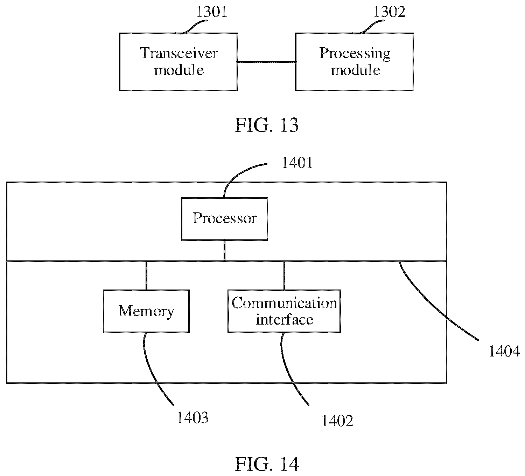

Based on a same technical concept, an embodiment of this application further provides a communication apparatus, configured to implement the method embodiments. FIG. 13 is a schematic diagram of a communication apparatus according to an embodiment of this application. The communication apparatus includes a transceiver module 1301 and a processing module 1302. The transceiver module 1301 is configured to perform information transceiver processing, and the processing module 1302 is used by the communication apparatus to process data. It should be understood that the processing module 1302 in this embodiment of this application may be implemented by a processor or a processor-related circuit component (or referred to as a processing circuit), and the transceiver module 1301 may be implemented by a transceiver or a transceiver-related circuit component.

For example, the communication apparatus may be a communication apparatus device, or may be a chip used in the communication apparatus device, or another combined device, component, or the like that has a function of the communication apparatus device.

Specifically, the transceiver module 1301 may be configured to receive a first request, where the first request includes first indication information, and the first indication information indicates the communication apparatus to discover a UDM in a PLMN to which an MT terminal belongs. The processing module 1302 may be configured to: obtain an identifier of the PLMN to which the MT terminal belongs, and obtain an address of the UDM of the PLMN based on the PLMN identifier.

In addition, the foregoing modules may be further configured to support other processes performed by the proxy network element in embodiments shown in FIG. 4 to FIG. 12. For beneficial effects, refer to the foregoing descriptions. Details are not described herein again.

Alternatively, when the proxy network element in the foregoing method embodiment is an NRF, the communication apparatus may alternatively be an SCP. Correspondingly, the transceiver module 1301 may send a first request to the proxy network element, where first indication information indicates the proxy network element to discover a unified data management UDM in a public land mobile network PLMN to which an MT terminal belongs, and receive an address that is of the UDM and that is sent by the proxy network element. The processing module 1302 may be configured to obtain routing information of the MT terminal from the UDM based on the address of the UDM.

In addition, the foregoing modules may be further configured to support other processes performed by the SCP in embodiments shown in FIG. 9 to FIG. 12. For beneficial effects, refer to the foregoing descriptions. Details are not described herein again.

Based on a same technical concept, an embodiment of this application further provides a communication device, configured to implement the method embodiments. FIG. 14 is a schematic diagram of another communication apparatus according to an embodiment of this application. The communication apparatus includes a processor 1401 and a communication interface 1402, and further may include a memory 1403 and a communication bus 1404. The processor 1401, the communication interface 1402, and the memory 1403 may be connected to each other by using the communication bus 1404. The communication bus 1404 may be a peripheral component interconnect (peripheral component interconnect, PCI) bus, an extended industry standard architecture (extended industry standard architecture, EISA) bus, or the like. The communication bus 1404 may be classified into an address bus, a data bus, a control bus, and the like. For ease of representation, only one line is used for representation in FIG. 14, but this does not mean that there is only one bus or only one type of bus. The processor 1401 may be a central processing unit (central processing unit, CPU), a network processor (network processor, NP), or a combination of a CPU and an NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (Generic Array Logic, GAL), or any combination thereof. The memory 1403 may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache.

Specifically, the processor 1401 may be configured to: receive a first request through the communication interface 1402, where the first request includes first indication information, and the first indication information indicates a proxy network element to discover a UDM in a PLMN to which an MT terminal belongs, obtain an identifier of the PLMN to which the MT terminal belongs, and obtain an address of the UDM of the PLMN based on the PLMN identifier.

In addition, the foregoing modules may be further configured to support other processes performed by the proxy network element in embodiments shown in FIG. 4 to FIG. 12. For beneficial effects, refer to the foregoing descriptions. Details are not described herein again.

Alternatively, when the proxy network element in the foregoing method embodiment is an NRF, the communication device may alternatively be an SCP. Correspondingly, the processor 1401 may be configured to: send a first request to the proxy network element through the communication interface 1402, where first indication information indicates the proxy network element to discover a unified data management UDM in a public land mobile network PLMN to which an MT terminal belongs, receive, through the communication interface 1402, an address that is of the UDM and that is sent by the proxy network element, and obtain routing information of the MT terminal from the UDM based on the address of the UDM.

In addition, the foregoing modules may be further configured to support other processes performed by the SCP in embodiments shown in FIG. 9 to FIG. 12. For beneficial effects, refer to the foregoing descriptions. Details are not described herein again.

An embodiment of this application provides a computer-readable storage medium, storing a computer program. The computer program includes instructions used to perform the foregoing method embodiments.

An embodiment of this application provides a computer program product including instructions. When the instructions are run on a computer, the foregoing method embodiments are performed.

In descriptions of embodiments of this application, the term "and/or" describes an association relationship between associated objects and indicates that three relationships may exist. For example, A and/or B may indicate the following three cases: Only A exists, both A and B exist, and only B exists. "A plurality of" in this application means two or more.

In addition, it should be understood that in the descriptions of this application, terms such as "first", "second", and "third" are merely for distinguishing and description, but should not be understood as indicating or implying relative importance, or should not be understood as indicating or implying a sequence. Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and their variants all mean "including but not limited to", unless otherwise specifically emphasized in another manner.

An embodiment of this application provides a computer-readable storage medium, storing a computer program. The computer program includes instructions used to perform the foregoing method embodiments.

An embodiment of this application provides a computer program product including instructions. When the instructions are run on a computer, the computer is enabled to perform the foregoing method embodiments.

Persons skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that computer program instructions may be used to implement each procedure and/or each block in the flowcharts and/or the block diagrams and a combination of a procedure and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program instructions may alternatively be stored in a computer-readable memory that can instruct the computer or the another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto the computer or the another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

Although preferred embodiments of this application have been described, persons skilled in the art can make changes and modifications to these embodiments once they learn the basic inventive concept. Therefore, the following claims are intended to be construed as to cover the preferred embodiments and all changes and modifications falling within the scope of this application.

It is clear that persons skilled in the art can make various modifications and variations to embodiments of this application without departing from the scope of embodiments of this application. Therefore, this application is intended to cover these modifications and variations of embodiments this application if they fall within the scope of claims of this application and equivalent technologies thereof.

## Claims

1. An addressing method, comprising:
receiving, by a proxy network element, a first request, wherein the first request comprises first indication information, and the first indication information indicates the proxy network element to discover a unified data management UDM in a public land mobile network PLMN to which a mobile terminated (MT) terminal belongs;
obtaining, by the proxy network element, an identifier of the PLMN to which the MT terminal belongs; and
obtaining, by the proxy network element, an address of the UDM in the PLMN based on the PLMN identifier.

2. The method according to claim 1, wherein the PLMN to which the MT terminal belongs is a current subscription PLMN of the MT terminal.

3. The method according to claim 1 or 2, wherein the obtaining, by the proxy network element, an identifier of the PLMN to which the MT terminal belongs comprises:
obtaining, by the proxy network element from a mobile number portability MNP, the identifier of the PLMN to which the MT terminal belongs; or
determining, by the proxy network element based on locally configured mobile subscriber number information of the proxy network element, that the MT terminal and the proxy network element belong to a same PLMN, and determining that the identifier of the PLMN to which the MT terminal belongs is an identifier of a PLMN to which the proxy network element belongs.

4. The method according to claim 3, wherein the obtaining, by the proxy network element from a mobile number portability MNP, the identifier of the PLMN to which the MT terminal belongs comprises:
obtaining, by the proxy network element from the MNP based on second indication information in the first request, the identifier of the PLMN to which the MT terminal belongs, wherein the second indication information indicates the proxy network element to obtain the identifier of the PLMN to which the MT terminal belongs;
if no mobile subscriber number information is configured in the proxy network element, obtaining, by the proxy network element from the MNP, the identifier of the PLMN to which the MT terminal belongs; or
determining, by the proxy network element based on the locally configured mobile subscriber number information, that a mobile number holder PLMN of the MT terminal is different from the PLMN to which the proxy network element belongs.

5. The method according to any one of claims 1 to 4, wherein the proxy network element is a service communication proxy network element SCP or a network repository function network element NRF.

6. The method according to claim 5, wherein the receiving, by a proxy network element, a first request comprises:
receiving, by the SCP, a first routing request sent by a short message gateway, wherein the first routing request is for obtaining routing information of the MT terminal; and
after the obtaining, by the proxy network element, an address of the UDM in the PLMN based on the PLMN identifier, the method further comprises:
sending, by the SCP, the first routing request to the UDM based on the address of the UDM, wherein the first routing request is for obtaining the routing information of the MT terminal; and
receiving, by the SCP, the routing information that is of the terminal and that is sent by the UDM, and sending the routing information of the terminal to the short message gateway.

7. The method according to claim 3 or 4, wherein the proxy network element is an SCP; and the obtaining, by the proxy network element from a mobile number portability MNP, the identifier of the PLMN to which the MT terminal belongs comprises:
sending, by the SCP, a first discovery request to a network repository function network element NRF, to request an address of the MNP;
receiving, by the SCP, a first discovery response sent by the NRF, wherein the first discovery response comprises the address of the MNP;
sending, by the SCP, a query request to the MNP based on the address of the MNP, wherein the query request comprises an identifier of the MT terminal; and
receiving, by the SCP, the identifier that is of the PLMN to which the MT terminal belongs and that is sent by the MNP.

8. The method according to any one of claims 5 to 7, wherein the obtaining, by the proxy network element, an address of the UDM of the PLMN based on the PLMN identifier comprises:
sending, by the SCP, a second discovery request to the NRF, wherein the second discovery request is for obtaining the address of the UDM of the PLMN; and
receiving, by the proxy network element, a second discovery response sent by the NRF, wherein the second discovery response comprises the address of the UDM.

9. The method according to claim 5, wherein the receiving, by a proxy network element, a first request comprises:
receiving, by the NRF, the first request sent by the SCP; and
after the obtaining, by the proxy network element, an address of the UDM in the PLMN based on the PLMN identifier, the method further comprises:
sending, by the NRF, the address of the UDM to the SCP.

10. The method according to claim 3 or 4, wherein the proxy network element is an NRF; and the obtaining, by the proxy network element from a mobile number portability MNP, the identifier of the PLMN to which the MT terminal belongs comprises:
obtaining, by the NRF from the MNP that has registered with the NRF, the identifier of the PLMN to which the MT terminal belongs; or
sending, by the NRF, a query request to an NRF in another PLMN, wherein the query request is for obtaining the identifier of the PLMN to which the MT terminal belongs, so that the NRF in the another PLMN obtains, from the MNP that has performed registration, the identifier of the PLMN to which the MT terminal belongs; and receiving, by the NRF, a query response sent by the NRF in the another PLMN, wherein the query response comprises the identifier of the PLMN to which the MT terminal belongs.

11. The method according to any one of claims 5, 9, and 10, wherein the obtaining, by the proxy network element, an address of the UDM of the PLMN based on the PLMN identifier comprises:
sending, by the NRF, a third discovery request to an NRF in the PLMN based on the PLMN identifier, wherein the third discovery request is for obtaining the address of the UDM in the PLMN; and receiving, by the NRF, the address that is of the UDM and that is sent by the NRF in the PLMN; or
if the PLMN identifier is an identifier of a PLMN to which the NRF belongs, determining, by the NRF, an address of a UDM in the PLMN to which the NRF belongs.

12. An addressing method, wherein the method comprises:
sending, by a service communication proxy network element SCP, a first request to a proxy network element, wherein first indication information indicates the proxy network element to discover a unified data management UDM in a public land mobile network PLMN to which an MT terminal belongs;
receiving, by the SCP, an address that is of the UDM and that is sent by the proxy network element; and
obtaining, by the SCP, routing information of the MT terminal from the UDM based on the address of the UDM.

13. The method according to claim 12, wherein before the sending, by an SCP, a first request to a proxy network element, the method further comprises:
receiving, by the SCP, a routing request sent by a short message gateway, wherein the routing request is for obtaining the routing information of the MT terminal; and
after the obtaining, by the SCP, routing information of the MT terminal from the UDM based on the address of the UDM, the method further comprises:
sending, by the SCP, the routing information of the MT terminal to the short message gateway.

14. A communication apparatus, comprising a processing module and a transceiver module, wherein the processing module and the transceiver module are configured to perform the method according to any one of claims 1 to 13.

15. A communication device, comprising a processor, and a memory and a communication interface that are separately coupled to the processor, wherein the communication interface is configured to communicate with another device, and the processor is configured to run instructions or a program in the memory, to perform the method according to any one of claims 1 to 13 through the communication interface.

16. A computer-readable storage medium, wherein the computer-readable storage medium stores instructions, and when the instructions are run on a computer, the computer is enabled to perform the method according to any one of claims 1 to 13.
